# EUROPEAN PATENT APPLICATION

(11) **EP 2 679 989 A2**
(43) Date of publication of application: **01.01.2014**
(21) Application number: 13174218.1
(22) Date of filing: 28.06.2013
(51) Int. Cl.: G01N 23/04

(54) **X-ray CT system for measuring three dimensional shapes and measuring method of three dimensional shapes by X-ray CT system**

(30) Priority: 28.06.2012 JP 2012144907
(71) Applicant: Hitachi, Ltd., Tokyo 100-8280 (JP)
(72) Inventor: Sadaoka, Noriyuki, Chiyoda-ku Tokyo, 100-8220 (JP); Nagumo, Yasushi, Chiyoda-ku Tokyo, 100-8220 (JP)
(74) Representative: Beetz & Partner

(57) **Abstract**

The invention relates to an X-ray CT system for measuring three-dimensional shapes, while the X-ray system is capable of extracting three-dimensional shape information with high accuracy in consideration of beam hardening depending on a material and thickness of a specimen (8). The X-ray CT system includes an optical distance meter (12) and a CT image analyzing unit (10). The optical distance meter (12) measures an outer shape of the specimen (8) simultaneously with a measurement of projection data. The CT image analyzing unit (10) calculates a boundary threshold for the specimen (8) on the basis of a CT image and a measurement value of the outer shape.

## Description

### BACKGROUND

The present invention relates to an X-ray CT (Computed Tomography) system for measuring three-dimensional shapes and a method for measuring three-dimensional shapes by the X-ray CT system.

X-ray CT systems are widely used as medical systems for measuring the insides of human bodies. Since X-ray CT systems can measure the insides of objects for industrial use without cutting of the objects, i.e., in a non-destructive manner, the X-ray CT systems are used to measure defects inside cast parts and the like.

Since such an industrial X-ray CT system is used to measure metal materials, unlike the medical X-ray CT systems, an X-ray emitted by the industrial X-ray CT system needs to have energy with strong transmission power in comparison with that for human bodies. As an X-ray source for generating the X-ray, an X-ray tube can be used for energy levels up to 800 kV, and an X-ray source provided with a linear accelerator is used for energy levels in an MV range.

As an X-ray tube for a low energy level range (up to 225 kV), there exists an X-ray source which has a focal size at a micrometer level, but has low transmission power. Thus, a thick metal specimen cannot be imaged. As an X-ray tube for a relatively high energy level range (from 320 kV to 800 kV), there exists an X-ray source which has higher transmission power but a focal size of which is in a range of a submillimeter level to a millimeter level. The linear accelerator that achieves an X-ray energy level in the MV range has higher transmission power than the aforementioned X-ray sources, and a focal size of the X-ray source for the linear accelerator is in a range of a submillimeter level to a millimeter level, like the X-ray tube for the relatively high energy level range (from 320 kV to 800 kV). The X-ray tubes and the X-ray tube provided with the linear accelerator normally emit X-rays which spreads in conical shapes. After the X-ray emission, the X-rays are collimated and formed in fan shapes.

As detectors for measuring decrement of an X-ray which is emitted from an X-ray source and irradiates a specimen to be imaged, radiation detectors such as scintillators or compound semiconductor detectors are used. The radiation detectors face the X-ray source, while the specimen is located between the X-ray source and the radiation detectors. The detectors are discretely arranged at regular intervals and measure integrated values of amounts of an X-ray transmitted in straight lines between the X-ray source and the centers of detector elements. In order to image the overall specimen, the specimen that is placed between the X-ray source and the detectors is placed on a turn table and rotated, and projection data that is necessary to reconstruct an overall image is acquired. In some cases, the specimen is fixed onto the turn table, the X-ray source and the detectors are rotated around the specimen, and necessary projection data is acquired.

All the detectors measure radiation amounts of the X-ray incident on the detectors for each of angular pitches. The measured radiation amounts are the projection data that is necessary to reconstruct the overall image. The image is reconstructed by a representative FBP method using the projection data acquired for each of the angular pitches.

In addition, a three-dimensional image of the specimen is acquired by overlapping two-dimensional computed tomographic (CT) images in the direction of the height of the specimen. Regarding engineering use of the CT images, the CT images have been used to identify whether or not a defect such as a defect of a cast exists in the object. In recent years, however, as described in "Yoshiyuki Sadaoka et al., Technology for Measuring Internal Dimensions and Casting Defect Size Using Industrial X-ray CT: Journal of Society of Automotive Engineers of Japan, Vol. 63, No. 5, pp 73-78 (2009)", the need to measure shapes and dimensions of specimens on the basis of three-dimensional images acquired from CT images has increased. The reason is that an X-ray CT system can measure an inner region that cannot be measured by other typical shape measurement devices such as a camera type measurement device, a laser type measurement device, and a contact type measurement device. In order to measure a dimension of a specimen from a CT image, a value of a boundary between the specimen and air on the CT image is calculated and the shape of the specimen to be imaged can be determined on the basis of the calculated value.

### SUMMARY

In order to achieve a measurement of dimensions of an industrial product by non-destructive inspection using an existing industrial X-ray CT system, a boundary between a specimen and air on an acquired CT image needs to be calculated. According to the principle of CT image formation, a CT value being associated with the space located near the boundary between the specimen and the air on the CT image is discretely, gradually changed from a CT value being associated with the specimen to a CT value being associated with the air.

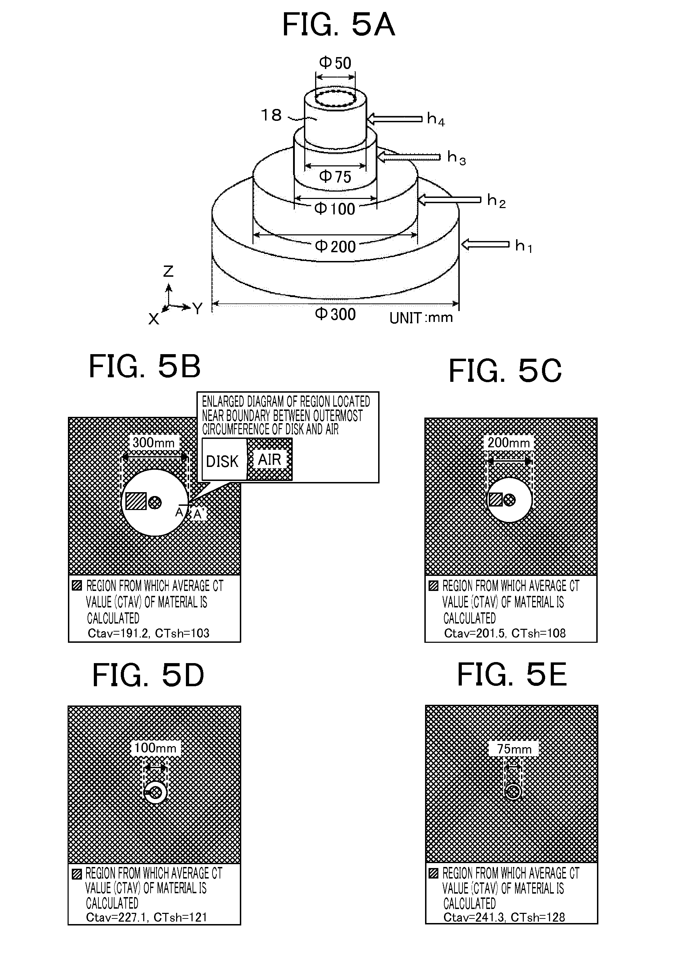

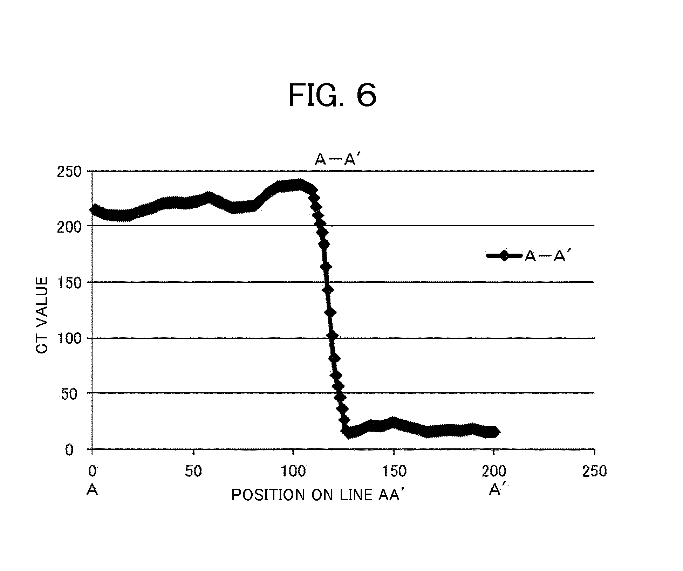

Fig. 5A illustrates a test object 18 (hereinafter referred to as step cylinder) that is to be imaged and has disk-like steps of which diameters are different. Figs. 5B to 5E illustrate simulation images acquired by virtually imaging the test object 18 by an industrial X-ray CT system. As illustrated in Fig. 5B, it is apparent that in a region located near a boundary between the test object 18 and air, a gray level gradually changes from a CT value (white region) corresponding to the test object 18 to a CT value (black region) corresponding to the air. Figs. 5C to 5E illustrate the simulation images obtained from vertical positions of the steps of the step cylinder. Fig. 6 illustrates a variation in CT values on a line AA' of the image illustrated in Fig. 5B, while the variation corresponds to a variation in CT values being associated with a region located near the contour of the step cylinder. This simulation assumes that an X-ray source is a 6MV linear accelerator, detectors are semiconductor detectors, and a material of the test object that is the step cylinder is iron. In the simulation, X-ray beam hardening is not corrected.

Normally, a boundary between a specimen and air is determined on the basis of a position corresponding to a value obtained by summing and averaging a CT value corresponding to the specimen and a CT value corresponding to the air. If the material of the specimen is uniform and homogeneous, CT values corresponding to the inside of the specimen are ideally constant. A small deviation among the CT values of the specimen, however, may occur depending on the density and thickness of the material of the specimen due to the beam hardening of the X-ray emitted by the X-ray CT system. Thus, if a material and thickness of a single specimen vary by the position, a value obtained by summing and averaging a CT value corresponding to the specimen and calculated from a specific position of a CT image and a CT value corresponding to the air is treated as a value corresponding to a boundary between the specimen and the air in the same manner as a conventional method, and this method is applied to all regions, a shape extraction error may occur.

The shape extraction error is described below. CT values (Ctav) corresponding to the test object that is the step cylinder illustrated in Fig. 5A are indicated in lower parts of Figs. 5B to 5E. Figs. 5B to 5E also illustrate regions (corresponding to specific regions) from which the CT values Ctav are calculated. It is apparent from Figs. 5B to 5E that the CT values Ctav vary depending on the thickness of the test object. In addition, Figs. 5B to 5E each illustrates a value CTsh obtained by summing and averaging the CT value Ctav of the interested region and a CT value corresponding to the air. It is apparent that since the CT values Ctav corresponding to the diameters of the steps of the test object vary, the boundary CT thresholds (summed and averaged values CTsh) also vary. In order to extract the boundaries from three-dimensional voxel data obtained by overlapping cross sections, a constant averaged value CTsh is normally used. Thus, if the beam hardening is not considered for the step cylinder illustrated in Fig. 5A, the accuracy of measuring shapes from regions may vary depending on the regions due to boundary CT thresholds (summed and averaged values CTsh) used. This example assumes that the material is iron and all regions are uniform. Even if the specimen is composed of a plurality of materials (for example, iron, aluminum, and plastic) in a spatial region, the same problem may occur.

When inner cylindrical parts (hollow parts) of the step cylinder illustrated in Figs. 5B to 5E are measured, the boundary CT thresholds (summed and averaged values CTsh) for the parts of which vertical positions are different vary, as described above. Thus, when inner radii of the cross sections are measured using a constant boundary CT threshold (summed and averaged value CTsh), the measured inner radii may have an error.

An object of the invention is to provide an X-ray CT system for measuring three-dimensional shapes and a method for measuring three-dimensional shapes by the X-ray CT system, while the X-ray CT system and the method have been devised under the aforementioned circumferences and enable three-dimensional shape information to be extracted with high accuracy in consideration of beam hardening depending on a material and thickness of a specimen.

According to the invention, the X-ray CT system includes an optical distance meter and a CT image analyzing unit, while the optical distance meter measures an outer shape of a specimen simultaneously with a measurement of projection data, and the CT image analyzing unit calculates a boundary threshold for the specimen on the basis of a CT image and a measurement value of the outer shape.

According to the invention, the X-ray CT system for measuring three-dimensional shapes and the method for measuring three-dimensional shapes by the X-ray CT system can be provided, which enable three-dimensional shape information to be extracted with high accuracy in consideration of beam hardening depending on a material and thickness of a specimen.

These features and advantages of the invention will be apparent from the following more particular description of preferred embodiments of the invention, as illustrated in the accompanying drawings.

### BRIEF DESCRIPTION OF THE DRAWINGS

Figs. 1A and 1B are diagrams illustrating an example of the configuration of an X-ray CT system for measuring three-dimensional shapes according to a first embodiment of the invention.
Figs. 2A and 2B are diagrams illustrating the example of the configuration of the X-ray CT system for measuring three-dimensional shapes according to the first embodiment of the invention.
Fig. 3 is a diagram illustrating an example of the configuration of an X-ray CT system for measuring three-dimensional shapes according to a second embodiment of the invention.
Fig. 4 is a flowchart of a process of extracting a three-dimensional overall shape from CT images and measurement values of surface shapes using the X-ray CT system according to the first embodiment of the invention.
Fig. 5A is a bird's eye view of a virtual test object (step cylinder).
Figs. 5B to 5E are diagrams illustrating simulation images acquired by imaging the test object (step cylinder) using a conventional X-ray CT system.
Fig. 6 is a diagram illustrating a variation in CT values corresponding to a region located near a boundary of the test object on a simulation image acquired by imaging the test object using the conventional X-ray CT system.

### DESCRIPTION OF THE PREFERRED EMBODIMENTS

The invention relates to a technique for three-dimensionally measuring outer and inner shapes of a specimen by measuring amounts of an X-ray transmitted through the specimen without destroying the specimen.

Hereinafter, embodiments of the invention are described using diagrams illustrating the example of the configuration of the X-ray CT system and a flowchart of a process of analyzing CT images.

### First Embodiment

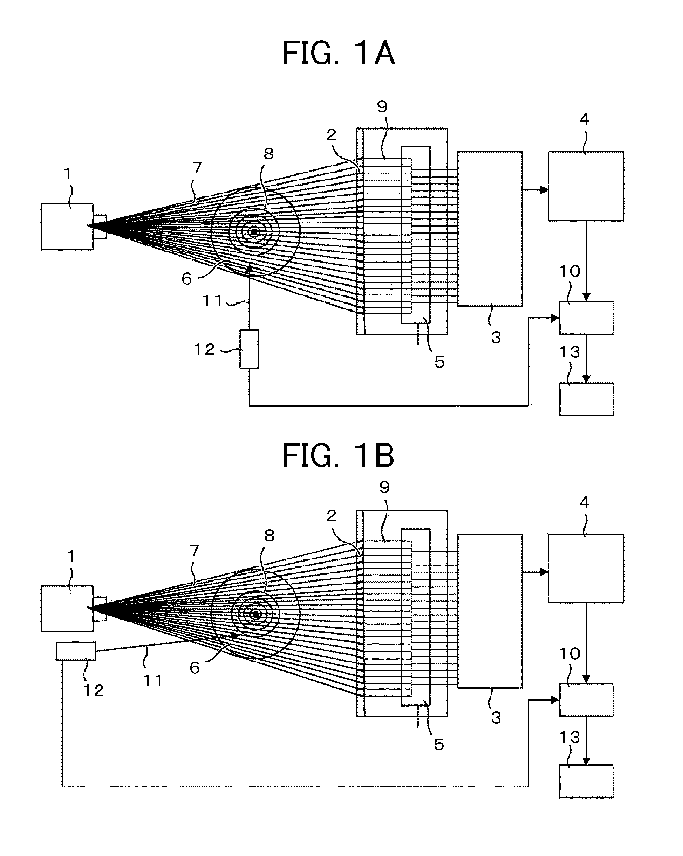

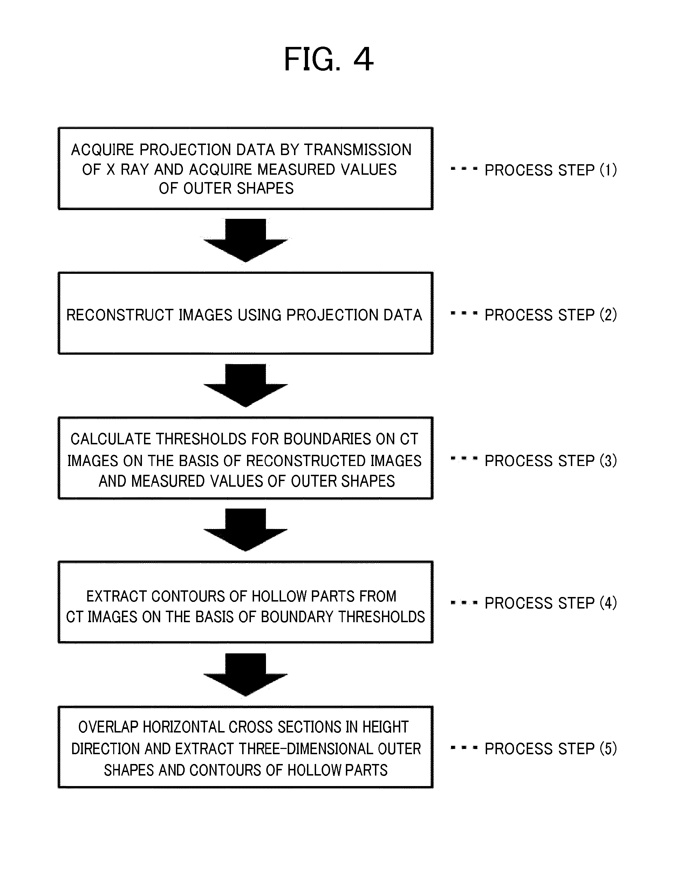

The configuration of the industrial X-ray CT system according to the first embodiment of the invention is illustrated in Figs. 1A, 1B, 2A, 2B, and 3. Fig. 4 is a flowchart of a process of measuring three-dimensional shapes including an inner part by use of the CT images.

As illustrated in Fig. 1A, in the industrial X-ray CT system, an X-ray source 1 faces detectors 2, and a turn table 6 is arranged between the X-ray source 1 and the detector 2. A specimen 8 to be imaged is placed on the turn table 6. An X-ray 7 is emitted by the X-ray source 1, passes through the specimen 8, attenuates and is detected by the detectors 2. As the detectors 2, compound semiconductor detectors or scintillators are used. The detectors 2 consists of a line array sensor including detector elements arranged at regular intervals in a horizontal direction or a two-dimensionally arranged plane array sensor including detector elements arranged at regular intervals in a horizontal direction and a vertical direction.

The X-ray that is incident on the detectors 2 is converted into electric signals corresponding to amounts of the X-ray incident on the detectors 2. The electric signals converted by the detectors 2 are transmitted through transmission lines 9 to a detector pixel integration processing mechanism 5. The detector pixel integration processing mechanism 5 executes a process of summing the signals for the number of the detector elements. The processed signals are transmitted to a signal processing circuit 3. The signal processing circuit 3 amplifies the signals and converts the signals into bit signals. Then, the bit signals are transmitted to an image reconstruction device 4.

In order to reconstruct an image of the overall specimen, the turn table 6 is rotated and data (referred to as projection data) of the amounts of the transmitted X-ray detected by all the detectors is collected for one rotation of the turn table for each of constant angular pitches. The projection data for each of the constant angular pitches is sequentially transmitted to and stored in the image reconstruction device 4. Then, when receiving the data for the one rotation, the image reconstruction device 4 executes an image reconstruction calculation so as to obtain a reconstructed image for the one rotation. The obtained reconstructed image is transmitted to a CT image display device 13 and displayed on a display.

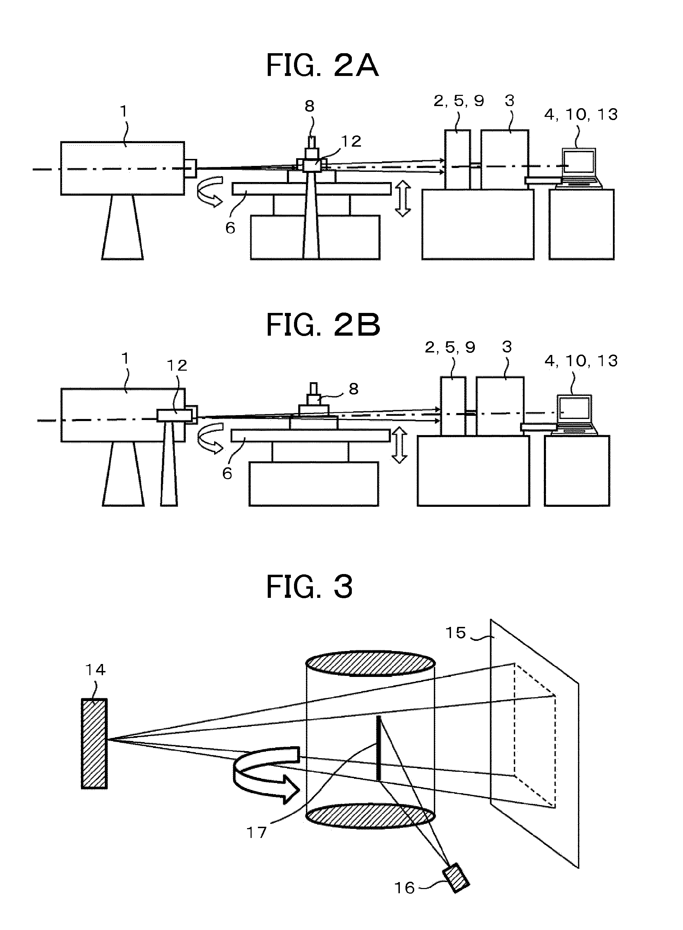

Fig. 2A is a vertical cross section view of a configuration of the devices. Cross-sectional images of vertical positions of the specimen 8 can be acquired by moving up and down the turn table 6 in the vertical direction. The X-ray CT system may be configured so that the turn table 6 is fixed in the vertical direction and the X-ray source 1 and the detectors 2 are capable of moving up and down.

In the X-ray CT system according to the present embodiment, an optical distance meter 12 for measuring an outer shape (contour) of the specimen 8 is arranged as well as the aforementioned devices. As illustrated in Fig. 2A, the optical distance meter 12 is arranged at the same vertical position as a central line of the X-ray emitted by the X-ray source 1. The optical distance meter 12 irradiates the specimen 8 with a laser beam 11 and specifies the position of the specimen 8 on the turn table 6. In order to acquire a CT image, the specimen 8 placed on the turn table 6 is rotated. The optical distance meter 12 measures the outer shape (contour) of the rotating specimen 8 by one rotation in synchronization with the rotation of the turn table 6. The outer shape of the specimen 8 is calculated on the basis of a distance measured from the relationship between relative positions of the optical distance meter 12 and specimen 8.

The optical distance meter 12 may be positioned so that the laser beam 11 crosses a direction in which the X-ray is emitted, as illustrated in Figs. 1A and 2A. The optical distance meter 12 may be positioned so that the laser beam 11 is emitted in the same direction as a part of the X-ray as illustrated in Figs. 1B and 2B. A unit for measuring the outer shape may be an optical comb generator, a stereo camera, a measurer using an ultrasonic wave or a microwave, or a measurer using a stereo camera as well as the distance meter using the laser beam.

In the present embodiment, the overall shape of the specimen is extracted with high accuracy by a process illustrated in Fig. 4 on the basis of CT images acquired by the aforementioned devices and measured data of outer shapes (only contours) of the specimen, while the overall shape includes the contours of hollow parts of the specimen. Specific processing flow is explained below.

In a process step (1), projection data obtained by the transmission of the X-ray and values of the outer shapes measured by various measurers such as the optical distance meter 12 are acquired for each of horizontal cross sections of the specimen. In a process step (2), the image reconstruction device 4 executes the image reconstruction calculation using the projection data acquired in the process step (1) so as to reconstruct CT images. In a process step (3), a CT image analyzing unit 10 calculates thresholds (summed and averaged values CTsh) for boundaries on the reconstructed CT images of the cross sections on the basis of the reconstructed CT images and the measurement values of the outer shapes. In a process step (4), the contours of the hollow parts are extracted from the CT images on the basis of the boundary thresholds (summed and averaged values CTsh) obtained in the process step (3). In this manner, the outer shapes and the contours of the hollow parts are calculated for the horizontal cross sections. In a process step (5), the outer shapes and the contours of the hollow parts can be three-dimensionally extracted by overlapping the cross sections in the direction of the height of the specimen.

As described above, the X-ray CT system includes the optical distance meter for measuring an outer shape of a specimen simultaneously with a measurement of projection data and the CT image analyzing unit for calculating a threshold for a boundary of the specimen on the basis of a CT image and a measurement value of an outer shape. Thus, a CT value, associated with the specimen, which would otherwise cause a deviation due to the beam hardening of the emitted X-ray is not necessary. Thus, the shape of the specimen can be extracted with high accuracy. According to the embodiment, three-dimensional shape information can be extracted with high accuracy in consideration of the beam hardening depending on the material and thickness of the specimen.

Regions that are an overhang portion and the like and cannot be measured by only an optical measurement system may exist even if the regions are included in an outer end portion. The X-ray CT system, however, can measure the shapes of the regions by extracting boundaries from CT images with the same accuracy as a region (outer shape) that can be measured by the optical measurement system.

The image reconstruction device 4 (illustrated in Figs. 1A and 1B) and the CT image analyzing unit 10 (illustrated in Figs. 1A and 1B) execute the aforementioned processes, obtain a three-dimensional shape, and cause the three-dimensional shape to be displayed on the CT image display device 13.

### Second Embodiment

A method for reconstructing an X-ray CT image according to the second embodiment is described with reference to Fig. 3. In the second embodiment, an X-ray tube 14 for emitting a conical X-ray beam, a two-dimensional plane detector 15, and an optical distance meter 16 for measuring an outer shape in the same manner as the first embodiment are arranged in a conical-X-ray CT system.

In the second embodiment, an outer shape on a line 17 extending in the vertical direction is measured using the optical distance meter 16 for each of projection angles in one rotation of a specimen placed on the turn table. Specifically, a three-dimensional CT image and measurement values of the outer shape can be simultaneously obtained for one rotation of the turn table. The optical distance meter 16 may be positioned in a manner that the direction which the optical distance meter 16 emits a laser beam may be parallel or perpendicular to the direction of emission of the X-ray, as illustrated in Figs. 1A or 1B. A unit for measuring the outer shape may be an optical comb generator, a measurer using an ultrasonic wave or a microwave, or a measurer using a stereo camera, as well as the distance meter using the laser beam. The overall shape of the specimen is extracted with high accuracy by the process illustrated in Fig. 4 on the basis of CT images acquired by the aforementioned devices and measured data of the outer shape (only the contour), while the overall shape includes the contour of a hollow part of the specimen.

A non-destructive inspection of an inner part of an industrial product can be efficiently executed with high accuracy using the method and system according to the invention. Especially, a three-dimensional shape including an inner shape can be measured using the method and system according to the invention.

The invention may be embodied in other specific forms without departing from the essential characteristics thereof as defined in the claims. The present embodiments are therefore to be considered in all aspects as illustrative and not restrictive, the scope of the invention being indicated by the appended claims, rather than by the foregoing description.

## Claims

1. An X-ray CT system for measuring three-dimensional shapes, comprising:
an X-ray source (1) that emits an X-ray (7);
a detector (2) that detects the X-ray (7) transmitted through a specimen (8) to be imaged;
a turn table (6) that is arranged between the X-ray source (1) and the detector and rotates the specimen (8) thereon; and
an image reconstruction unit (4) that reconstructs a CT image on the basis of projection data obtained by the detector (2)
**characterized by** further comprising
an optical distance meter (12) that measures an outer shape of the specimen (8) simultaneously with a measurement of the projection data by the detector (2); and
a CT image analyzing unit (10) that calculates a boundary threshold for the specimen (8) on the basis of the CT image reconstructed by the image reconstruction unit (4) and a measurement value of the outer shape measured by the optical distance meter (12).

2. The X-ray CT system according to claim 1,
wherein the optical distance meter (12) installs one of a laser, an optical comb, a stereo camera, an ultrasonic wave or a microwave .

3. The X-ray CT system according to claim 1 or 2, wherein the CT image analyzing unit (10) extracts the contour of a hollow part from the CT image on the basis of the calculated boundary threshold for the specimen (8).

4. A method for measuring three-dimensional shapes by an X-ray CT system, comprising the steps of:
placing a specimen (8) to be imaged on a turn table (6) and rotating the turn table (6) so as to rotate the specimen (8);
irradiating the specimen (8) that is placed and rotated on the turn table (6) with an X-ray (7);
detecting the X-ray (7) transmitted through the specimen with the use of a detector (2); and
reconstructing a CT image based on projection data obtained by the detection of the transmitted X-ray by the detector (2),
wherein an outer shape of the specimen (8) is optically measured simultaneously with the detecting the X-ray (7) transmitted through the specimen (8), and a boundary threshold for the specimen (8) is calculated on the basis of the CT image and a measurement value of the outer shape.

5. The method according to claim 4,
wherein the outer shape of the specimen (8) is measured using a laser, an optical comb, a stereo camera, an ultrasonic wave, or a microwave.

6. The method according to claim 4 or 5,
wherein the contour of a hollow part is extracted from the CT image on the basis of the calculated boundary threshold.
